# EUROPEAN PATENT SPECIFICATION

(11) **EP 1 944 818 B1**
(45) Date of publication and mention of the grant of the patent: **19.10.2011**
(21) Application number: 07150035.9
(22) Date of filing: 14.12.2007
(51) Int. Cl.: H01M 2/10, G07C 9/00

(54) **A handheld device**
Handgerät
Dispositif portatif

(30) Priority: 05.01.2007 JP 2007000482
(43) Date of publication of application: 16.07.2008
(73) Proprietor: OMRON Automotive Electronics Co., Ltd., Komaki, Aichi 485-0802 (JP)
(72) Inventor: Matsushita, Takao c/o Omron Corporation, Shimogyo-ku, Kyoto-shi Kyoto 600-8530 (JP); Sasaki, Satoru c/o Omron Corporation, Shimogyo-ku, Kyoto-shi Kyoto 600-8530 (JP)
(74) Representative: Wilhelms · Kilian & Partner Patentanwälte

(56) References cited:
- JP-A- 9 331 160
- JP-A- 2005 122 917
- JP-T1- 9 331 160
- US-A1- 2005 143 029

## Description

### BACKGROUND OF THE INVENTION

### 1. Field of the Invention

The present invention relates to a handheld device. More particularly, the invention relates to a handheld device which is used, for example, as a remote controller for use with a remote keyless entry system of a vehicle such as an automotive vehicle.

### 2. Description of Related Art

The remote keyless entry system is a convenient system which does not employ a mechanical key but permits the automotive doors to be locked or unlocked simply by manipulating a push button of a small remote controller of a matchbox size (hereinafter, referred to as the handheld device). The system also includes an advanced type which negates the need for manipulating the push button of the handheld device. The advanced system permits a user carrying the handheld device in pocket or the like to lock or unlock the vehicle door by pushing an entry button of the vehicle door, thus saving the user from taking out the handheld device from pocket each time.

Since all such handheld devices are used outdoors, it is essential to devise waterproof measures against wet weather or the like. In addition, all these handheld devices work on disposable batteries. Hence, it is also necessary to give consideration to the ease of replacing the battery.

The conventional method of replacing the battery in the handheld-device is divided roughly into the following two. In the first method, a case of the handheld device is disassembled for battery replacement (see, for example, JP-A-2003-201781 (case disassemble-and-replace method), JP-A-2003-90152 (case disassemble-and-replace method) and JP-A-2001-339176 (case disassemble-and-replace method) (Patent Documents 1 to 3)). Hereinafter, the first method is referred to as "case disassemble-and-replace method". In the second method, a removable battery cover is previously attached to the case of the handheld device so that the battery cover may be opened for battery replacement (see, for example, JP-A-9-121392 (battery-cover remove-and-replace method) (Patent Document 4)). Hereinafter, the second method is referred to as "battery-cover remove-and-replace method".

A drawback of the case disassemble-and-replace method is that an electronic substrate in the case may drop out during the battery replacement. If the electronic substrate is fixed to the case (by way of screw or the like), the dropout of the electronic substrate may be avoided. However, this measure is not recommendable because an increased manufacture cost results.

In contrast, the battery-cover remove-and-replace method is superior in that this method does not potentially involve the fear of dropout of the electronic substrate, covering the drawback of the case disassemble-and-replace method. Unfortunately, however, this method has the following disadvantage.

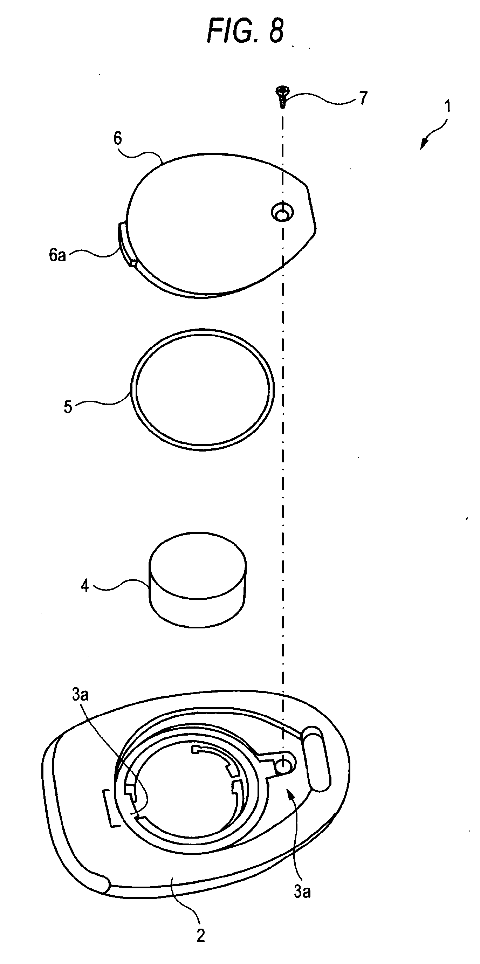

FIG. 8 shows a conventional handheld device of the battery-cover remove-and-replace type (see Patent Document 4). Referring to the figure, the battery replacement is performed according to a procedure including the steps of: (1) setting a button battery 4 in a battery receiving hole 3 formed in a case 2 of a handheld device 1; (2) inserting an O-ring 5 for waterproof; (3) placing a battery cover 6 on the hole and fitably engaging a projection 6a of the battery cover 6 with a peripheral recess 3a of the battery receiving hole 3; and (4) fixing the battery cover 6 to the case 2 with a screw 7. The procedure has a disadvantage that the 0-ring 5 may be lost during the battery replacement.

As described above, the case disassemble-and-replace method has the drawback of potential dropout of the electronic substrate, whereas the battery-cover remove-and-replace method involves the fear of losing a component such as the O-ring. Both the methods have room for improvement.

A handheld device according to the preamble of claim 1 is known from JP 09331160 A.

### SUMMARY OF THE INVENTION

In view of the foregoing, the invention particularly seeks to provide a handheld device which is designed to obviate the loss of component.

A handheld device according to the invention is as defined in claim 1. It comprises: a body accommodating therein at least an electronic substrate; and a battery cover formed with a battery receiving portion for accommodating a battery, wherein the body includes at least a pair of walls substantially disposed in parallel to each other, and apertures, holes or recesses formed in these walls, and the battery cover includes projections formed at lateral faces thereof and adapted for engagement with the apertures, holes or recesses in the walls of the body, and a groove in which a waterproof seal covering a periphery of the battery receiving portion is fitted, a part of which waterproof seal is disposed along the projections.

According to the invention, the waterproof seal is fitted in the groove formed in the battery cover and has a part thereof disposed along the projections. Therefore, there is no fear of losing the waterproof seal during the replacement of the battery of the handheld device because the waterproof seal is unified with the battery cover. When the battery cover is fixed to the body, the part of the waterproof seal that is disposed along the projections is compressed so as to exert a repulsive force on the battery cover. Hence, the battery cover is prevented from disengaging from the body.

### BRIEF DESCRIPTION OF THE DRAWINGS

FIGs. 1A and 1B are external views of a handheld device according to an embodiment of the invention.
FIG. 2 is a diagram showing an internal structure of a case portion 13.
FIG. 3 is a sectional view of a handheld device 10.
FIG. 4 is an exploded view of a transmitter module 16.
FIGs. 5A and 5B are external views of a battery cover 24.
FIGs. 6A to 6C are a group of diagrams showing the steps of a procedure of mounting the battery cover 24 to a lower body 18.
FIG. 7 is a diagram showing the comparison of the area of the battery cover 24.
FIG. 8 is a diagram showing a conventional handheld device of a battery-cover remove-and-replace method.

### DESCRIPTION OF THE PREFERRED EMBODIMENTS

A preferred embodiment of the invention will hereinbelow be described with reference to the accompanying drawings. It is noted that particular details and examples, as used herein, as well as numerical values, character strings and other symbols, as used herein, are used only as reference for the purpose of clarifying the concept of the invention. It is therefore apparent that all or a part of the above does not limit the concept of the invention. It is further noted that a detailed description on the known techniques, procedures, architectures and circuit configurations (hereinafter, referred to as "known items") is omitted for the sake of simplicity and that the omission is not intended to exclude all or a part of these known items. By definition, such known items are included in the following description because these known items were known to those skilled in the art when the application of the invention was filed.

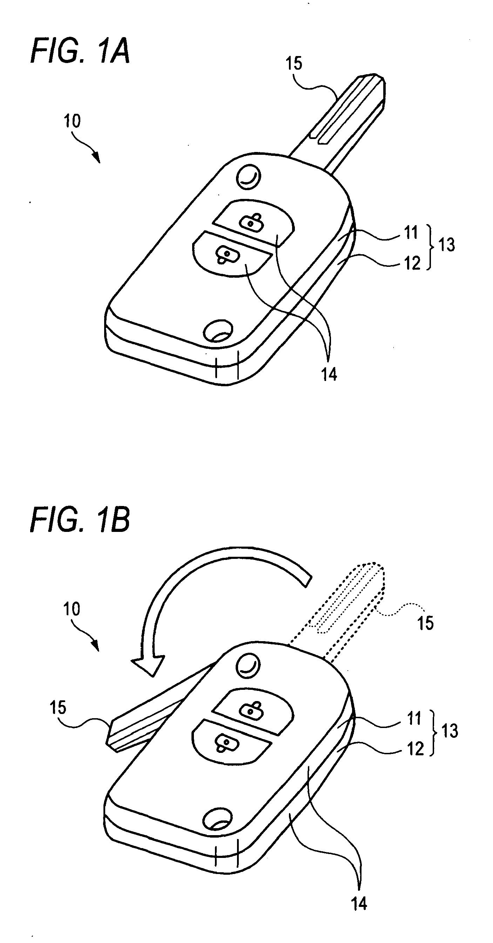

FIGs. 1A and 1B are external views of a handheld device according to the embodiment of the invention (which is not particularly limited and is exemplified by a remote controller for use with, for example, a remote keyless entry system of a vehicle such as an automotive vehicle). Referring to the figure, a handheld device 10 comprises a case portion 13 of a two-piece structure including an upper case 11 and a lower case 12. The handheld device 10 is arranged such that one or more operating buttons 14 (such as to lock or unlock the doors) are disposed on a surface of the upper case 11 and that a mechanical key 15, which is adapted to project from a lateral side of the case portion 13, may be received in the case portion 13 as folded in a jackknife fashion. The terms "upper" and "lower", as used herein, are defined that an operating-button side is the "upper" side and the opposite side is the "lower" side. Hereinafter, the upward and downward directions are defined to mean the same.

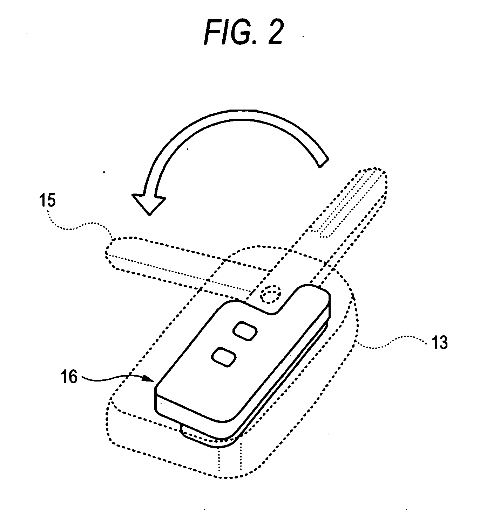

FIG. 2 is a diagram showing an internal structure of the case portion 13. As shown in the figure, a transmitter module 16 of a waterproof structure is mounted in the case portion 13 along with the above mechanical key 15.

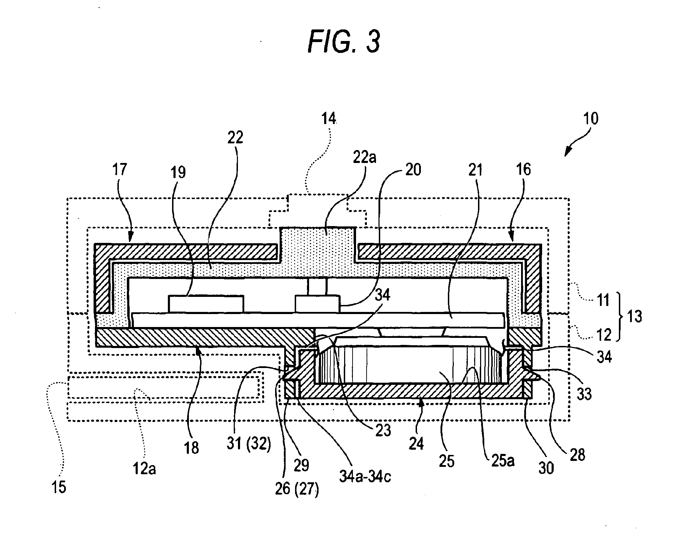

FIG. 3 is a sectional view of the handheld device 10. Referring to the figure, the mechanical key 15 is accommodated in a recess 12a formed in the lower case 12, whereas the transmitter module 16 is mounted in a space defined between the upper case 11 and the lower case 12.

The transmitter module 16 includes an upper body 17 and a lower body 18. In a space defined between the upper body 17 and the lower body 18, there are accommodated an electronic substrate 21 having an electronic circuit 19 and a switch element 20 surface-mounted thereon; and a waterproof rubber 22 formed with a switching projection 22a abutted against the switch element 20, the electronic substrate and the waterproof rubber arranged upwardly in this order from the bottom of the drawing. The switching projection 22a of the waterproof rubber 22 has its top abutted against a lower side of the operating button 14 of the upper case 11. On the other hand, a part of the lower body 18 is cut away to form an aperture which defines a battery receiving hole 23.

The battery receiving hole 23 has a battery cover 24 removably mounted thereto, the battery cover mounted from the lower side as seen in the figure. The battery cover 24 accommodated therein a button battery 25. As will be specifically described hereinlater, the battery cover 24 is generally formed in one piece of a transversely elongate box shape, achieving a required mechanical strength. The battery cover is formed with plural projections 26 to 28 at two lateral faces of the short sides thereof (two projections 26, 27 are formed at the left-hand lateral face as seen in the figure and one projection 28 formed at the right-hand lateral face according to the embodiment, but the arrangement is not limited to this). Further, the battery cover is substantially centrally formed with a battery receiving portion 25a shaped like a circular hole for receiving the battery 25 therein. A waterproof seal 34 formed from an elastic material such as rubber is interposed between the battery cover and the lower body 18. A part of the waterproof seal 34 is extended to one lateral face (formed with the projections 26, 27) of the battery cover 24 so that the extended portion of the waterproof seal 34 constitutes repulsive ribs 34a to 34c, which will be described hereinlater.

On the other hand, the lower body 18 is formed with at least a pair of walls 29, 30, which are substantially disposed in parallel to each other and are located on the opposite sides of the above battery receiving hole 23. The individual walls 29, 30 are formed with apertures 31 to 33 (which may also be holes or recesses) for engagement with the projections 26 to 28 of the battery cover 24.

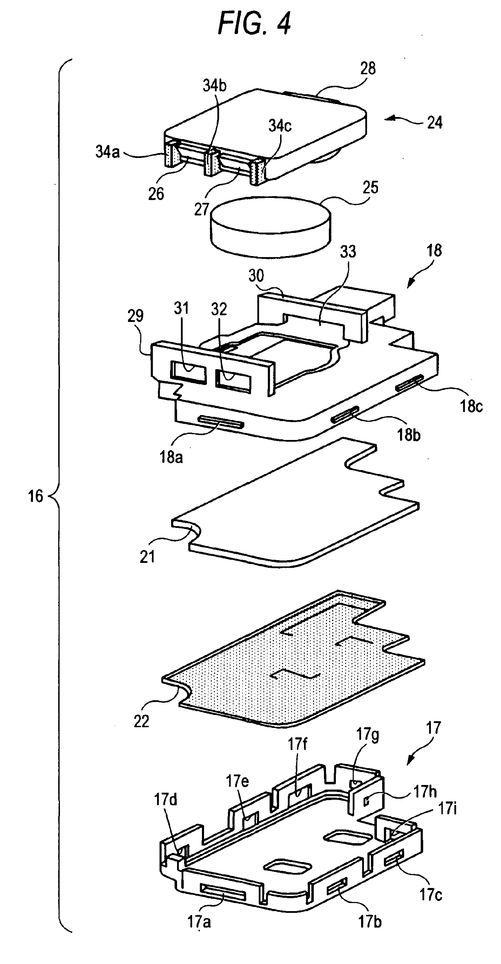

FIG. 4 is an exploded view of the transmitter module 16. It is noted that this figure depicts the transmitter module 16 of FIG. 3 upside down. Referring to the figure, the transmitter module 16 is mounted as follows. First, the waterproof rubber 22 is placed in the upper body 17. The electronic substrate 21 is placed on the waterproof rubber 22. The lower body 18 is placed over the electronic substrate, and plural projections 18a to 18c formed at the sides of the lower body 18 (projections are also formed at the far sides of the lower body.) are engaged with holes 17a to 17i formed in the sides of the upper body 17, whereby the upper body 17 and the lower body 18 are unified.

Subsequently, the battery 25 is loaded on the battery cover 24, which is positioned to direct the battery-25 carrying side downward and is placed on the battery receiving hole 23 of the lower body 18. A predetermined procedure (described hereinlater) is taken to bring the projections 26 to 28, formed at the lateral faces of the battery cover 24, into engagement with the apertures 31 to 33 formed in at least one pair of walls 29, 30 disposed on the surface of the lower body 18 substantially in parallel to each other, whereby the battery cover 24 and the lower body 18 are unified.

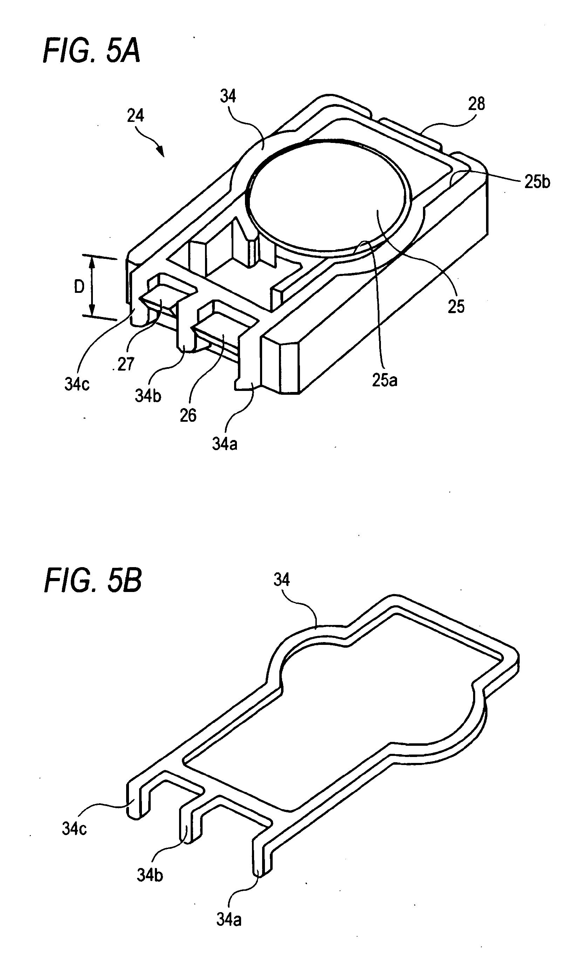

FIGs. 5A and 5B is an external view of the battery cover 24 and the waterproof seal 34. FIG. 5A shows the battery cover 24 as viewed obliquely, the battery cover directing its battery-25 carrying side upward. FIG. 5B shows the waterproof seal 34 as viewed in the same direction, the seal being in a state yet to be mounted (or dismounted from the battery cover 24). Referring to these figures, the battery cover 24 is generally formed in one piece of the transversely elongate box shape having a thickness D, thus achieving the required mechanical strength. As described in the foregoing, the battery cover has the projections 26 to 28 formed at the two lateral faces of the short sides thereof and is substantially centrally formed with the battery receiving portion 25a shaped like a circular hole for receiving the battery 25 therein. The battery cover is further formed with a groove 25b in which the waterproof seal 34 formed from the elastic material such as rubber is mounted.

The groove 25b is formed in one surface of the battery cover 24 (battery 25 receiving surface) as continuously extended along a circumference of the battery cover, such that the waterproof seal 34 mounted in the groove 25b may provide waterproofing between the battery cover 24 and the lower body 18. A part of the waterproof seal 34 (the repulsive ribs 34a to 34c) is so formed as to cover the lateral face of the battery cover 24, at which face the projections 26, 27 are formed. As will be specifically described hereinlater, the repulsive ribs 34a to 34c play an important role when the battery cover 24 is mounted to the lower body 18.

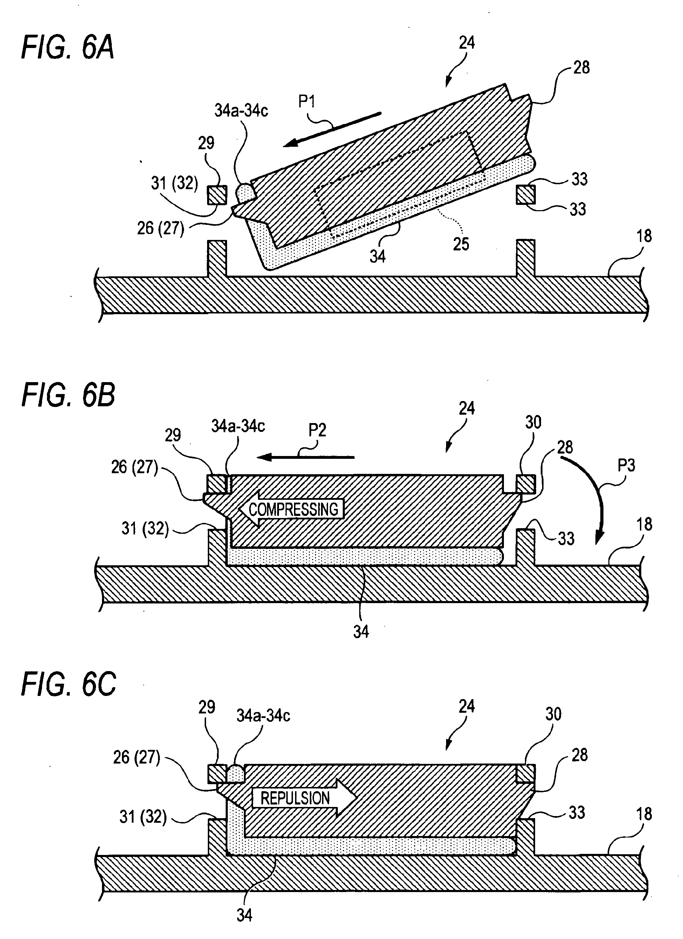

FIGs. 6A to 6C are a group of diagrams showing the steps of the procedure of mounting the battery cover 24 to the lower body 18. Referring to the figure, the battery cover 24 with the battery 25 loaded thereon is first inclined in a direction of an arrow P1 and the projections 26, 27 on the one lateral face of the battery cover 24 are inserted in the apertures 31, 32 in the wall 29 of the lower body 18, as shown in FIG. 6A. Subsequently, as shown in FIG. 6B, the repulsive ribs 34a to 34c of the waterproof seal 34 are compressively deformed by applying a force in a leftward direction (direction of an arrow P2) as seen in the figure. The compressive deformation of the repulsive ribs 34a to 34c provides a minor clearance between the right side of the battery cover 24 as seen in the figure and the wall 30. In this state, the battery cover 24 is appropriately turned clockwise (direction of an arrow P3) with respect to the drawing surface about the point of engagement between the projections 26, 27 and the apertures 31, 32, as the supporting point so that the battery cover 24 is substantially brought into a horizontal position. When the battery cover 24 is released (the application of the force in the direction of the arrow P2 is ended), the clearance between the right side of the battery cover 24 and the wall 30 is eliminated due to the repulsive force of the repulsive ribs 34a to 34c, as shown in FIG. 6C. Thus, the projection 28 of the battery cover 24 is engaged with the aperture 32 in the wall 30.

As described above, the handheld device 10 according to the embodiment is constructed such that the transmitter module 16 mounted in the case portion 13 has the two-piece structure including the upper body 17 and the lower body 18, and that at least the pair of walls 29, 30 are disposed upright on the lower body 18 in the substantial parallel relation and the battery cover 24 with the battery 25 loaded thereon is engaged with the walls 29, 30. Therefore, the device may offer an effect to prevent the electronic substrate 21 from dropping out during the replacement of the battery 25 and to prevent the waterproof seal 34 from being lost.

The procedure of replacement of the battery 25 according to the embodiment may be accomplished simply by inclining the battery cover 24 with a fresh battery 25 loaded thereon and bringing the projections 26, 27 of the battery cover 24 into engagement with the apertures 31, 32 in one wall 29 of the lower body 18 as compressively deforming the repulsive ribs 34a to 34c, followed by engaging the projection 28 of the battery cover 24 with the aperture 33 in the other wall 30 of the lower body 18 as maintaining the repulsive ribs 34a to 34c in compressive deformation. During the battery replacement, the electronic substrate 21 is firmly held between the upper body 17 and the lower body 18. Therefore, the possibility of the electronic substrate 21 dropping out is eliminated. Furthermore, the waterproof seal 34 of the embodiment, which is equivalent to the O-ring 5 of the related art (see FIG. 8), is fitted in the groove 25b of the battery cover 24 and has a part thereof extended to one side of the battery cover 24 and constituting the repulsive ribs 34a to 34c. Therefore, the waterproof seal 34 is also prevented from dropping out during the battery replacement. This eliminates the fear of the waterproof seal being lost.

In addition, the battery cover 24 according to the embodiment has an effect to be reduced in size as compared with the related-art battery cover (e.g., the battery cover 6 shown in FIG. 8).

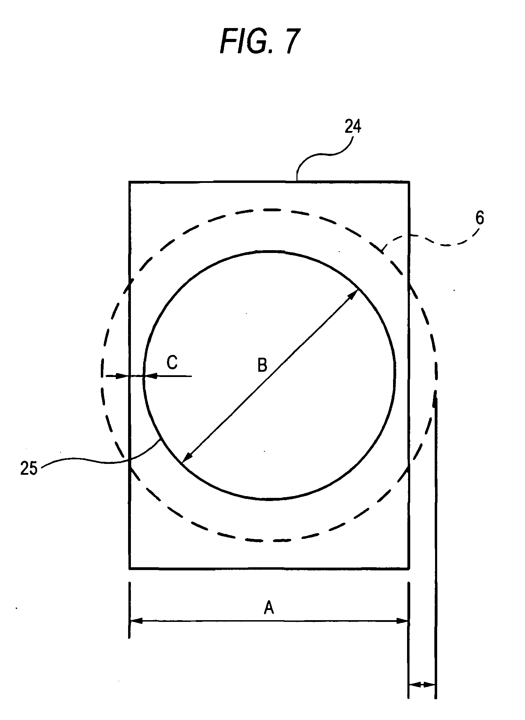

FIG. 7 is a diagram showing the comparison of the area of the battery cover 24. Referring to the figure, a dimension A of the short side of the battery cover 24 may be at least a diameter B of the battery 25 plus a space C for forming the groove 25b in which the waterproof seal 34 is fitted. In contrast, the related-art battery cover 6 (depicted as circle for convenience) must provide not only a space for mounting the O-ring 5 but also a space for fixing the screw 7, a space for forming the projection 6a and the like. It is therefore unavoidable that the related-art battery cover has a larger dimension than the dimension A of the battery cover 24 of the embodiment.

The handheld device 10 with the built-in mechanical key is particularly benefited from the merit (reduction of the dimension A) of the battery cover 24 according to the embodiment. The reason is as follows. The handheld device of this type is required to provide a space for the mechanical key 15 to be accommodated in the handheld device 10. As the dimension A of the battery cover 24 is reduced, it is easier for the device to provide the required space.

## Claims

1. A handheld device (10) comprising: a body (17, 18) accommodating therein at least an electronic substrate (21); and a battery cover (24) formed with a battery receiving portion (25a) for accommodating a battery (25), wherein
the body (17, 18) includes at least a pair of walls (29, 30) substantially disposed in parallel to each other, and apertures (31, 32, 33), holes or recesses formed in these walls, **characterized in that**
the battery cover (24) includes projections (26, 27, 28) formed at lateral faces thereof and adapted for engagement with the apertures (31, 32), holes or recesses in the walls of the body, and a groove (25b) in which a waterproof seal. (34) covering a periphery of the battery receiving portion (25a) is fitted, said waterproof seal (34) having ribs (34a, 34b, 34c) extending out of said groove (25b) to be disposed along projections (26, 27) formed at a lateral face.

## Patentansprüche

1. Handgerät (10), welches aufweist:
einen Körper (17, 18), der wenigstens ein elektronisches Substrat (21) aufnimmt; und eine Batterieabdeckung (24), welche mit einem Batterieaufnahmeabschnitt (25a) zur Aufnahme einer Batterie (25) ausgebildet ist, wobei
der Körper (17, 18) wenigstens ein Paar von im wesentlichen parallel zueinander angeordneten Wänden (29, 30) und in diesen Wänden ausgebildete Öffnungen (31, 32, 33), Löcher oder Ausnehmungen enthält, **dadurch gekennzeichnet, dass**
die Batterieabdeckung (24) an seitlichen Wänden derselben ausgebildete und für ein Eingreifen in die Öffnungen (31, 32), Löcher oder Ausnehmungen in den Wänden des Körpers eingerichtete Vorsprünge sowie eine Nut (25b), in welche eine wasserdichte Dichtung (34) eingesetzt ist, welche den Rand des Batterieaufnahmeabschnitts (25a) abdeckt, enthält, wobei die wasserdichte Dichtung (34) Rippen (34a, 34b, 34c) aufweist, die sich für eine Anordnung längs an einer seitlichen Fläche ausgebildeten Vorsprüngen (26, 27) aus der Nut (25b) herauserstrecken.

## Revendications

1. Dispositif portatif (10) comprenant : un corps (17, 18) contenant au moins un substrat électronique (21); et un couvercle de pile (24) comportant une partie formant logement de pile (25a) destinée à accueillir une pile (25), dans lequel
le corps (17, 18) comprend au moins une paire de parois (29, 30) disposées sensiblement parallèlement l'une à l'autre, et des ouvertures (31, 32, 33), des orifices ou des évidements situés dans ces parois, **caractérisé en ce que**
le couvercle de pile (24) comporte des saillies (26, 27, 28) situées au niveau de ses surfaces latérales et qui sont adaptées pour se loger dans les ouvertures (31, 32), les orifices ou les évidements des parois du corps, et une gorge (25b) dans laquelle est placé un joint étanche (34) recouvrant la périphérie de la partie formant logement de pile (25a), ledit joint étanche (34) présentant des pattes (34a, 34b, 34c) dépassant de ladite gorge (25b) et destinées à venir se placer le long des saillies (26, 27) situées au niveau d'une surface latérale.
